# EUROPÄISCHE PATENTSCHRIFT

(11) **EP 3 526 291 B1**
(45) Veröffentlichungstag und Bekanntmachung des Hinweises auf die Patenterteilung: **09.09.2020**
(21) Anmeldenummer: 16788459.2
(22) Anmeldetag: 12.10.2016
(51) Int. Cl.: C09D 5/00, C09C 1/30, C09D 7/62, C09C 3/12, C09C 3/10, C09C 3/00, C08K 3/36, C08K 9/06, C08K 9/08

(54) **HYDROPHOBIERENDE ADDITIVE**
HYDROPHOBING ADDITIVES
ADDITIFS HYDROFUGEANTS

(43) Veröffentlichungstag der Anmeldung: 21.08.2019
(73) Patentinhaber: Wacker Chemie AG, 81737 München (DE)
(72) Erfinder: HASHEMZADEH, Abdulmajid, 84489 Burghausen (DE)
(74) Vertreter: Ege, Markus
(86) Internationale Anmeldenummer: PCT/EP2016/074395
(87) Internationale Veröffentlichungsnummer: WO 2018/068839

(56) Entgegenhaltungen:
- EP-A1- 1 302 444
- EP-A1- 1 911 821
- EP-A1- 2 172 523
- EP-A2- 1 138 724
- WO-A1-2011/058051
- DATABASE WPI Week 201329 Thomson Scientific, London, GB; AN 2013-F62947 XP002770560, -& JP 2013 067787 A (NISSHIN CHEM IND CO LTD) 18. April 2013 (2013-04-18)
- DATABASE WPI Week 200635 Thomson Scientific, London, GB; AN 2006-336245 XP002770561, -& JP 2006 117445 A (HAKUTO KK) 11. Mai 2006 (2006-05-11)

## Beschreibung

Gegenstand der vorliegenden Erfindung sind Polymerzusammensetzungen enthaltend Silan-haltige Mischpolymerisate sowie hydrophobierende Additive basierend auf Silica, funktionelle Gruppen tragenden Alkylalkoxysilanen und Silikonharzen; Kompositpartikel enthaltende Zusammensetzungen basierend auf Silica, funktionelle Gruppen tragenden Alkylalkoxysilanen und Silikonharzen sowie Silan-haltigen Mischpolymerisaten Verfahren zur Herstellung der vorgenannten Zusammensetzungen sowie deren Verwendung in Beschichtungsmitteln, wie Farben oder Lacken.

Die WO2004/035473 und WO2004/035474 beschreiben mit Epoxy-Silanen modifizierte Silicadispersionen als Additiv für polymerhaltige Beschichtungsmittel zur Verbesserung der adhäsiven Eigenschaften und Wasserbeständigkeit von Beschichtungen. Die WO2012/022667 beschreibt Kompositpartikel basierend auf organischen Polymerisaten, feinteiligem anorganischem Feststoff, wie Silica, sowie Epoxy-Silanen zur Herstellung von beispielsweise Klebstoffen. Epoxy-Silane werden hierbei zur Verbesserung der Lagerstabilität der Silicapartikel beziehungsweise der Kompositpartikel eingesetzt.

Die WO2016/074664 beschreibt wässrige hydrophobierende Additive umfassend als erste Wirkstoffkomponente Silane und als zweite Wirkstoffkomponente Kieselsäurederivate, wie Wasserglas, und zudem Emulgatoren, wie beispielsweise Polydimethylsiloxan-Derivate. Auf Grund des Einsatzes der unterschiedlichen Wirkstoffkomponenten wird gleichzeitig eine Hydrophobierung oberflächennaher Bereiche sowie tieferer Schichten von Substraten erreicht.

Nachteiligerweise werden bei Zusatz von herkömmlichen Silicabasierenden Additiven zu polymerhaltigen Beschichtungsmitteln Beschichtungen erhalten, die zur Oberflächenklebrigkeit oder zum Erweichen neigen. Bei der Herstellung solcher Beschichtungen treten auch in verstärktem Maße Verlaufsstörungen auf, was sich an der Oberfläche der Beschichtungen beispielsweise an der Bildung von sogenannten Fischaugen erkennen lässt. Solche Probleme sind umso ausgeprägter, wenn die Beschichtungsmittel größere Anteile an hydrophobierenden Additiven enthalten, oder im Falle unpigmentierter Beschichtungen.

Vor diesem Hintergrund bestand die Aufgabe der vorliegenden Erfindung, hydrophobierende Zusammensetzungen bereitzustellen, mit denen die vorgenannten Probleme, insbesondere die Oberflächenklebrigkeit, vermieden oder zumindest reduziert werden können.

Ein Gegenstand der Erfindung sind Polymerzusammensetzungen enthaltend ein oder mehrere Silan-haltige Mischpolymerisate und ein oder mehrere hydrophobierende Additive, wobei die hydrophobierenden Additive auf Silica, einem oder mehreren Silikonharzen und einem oder mehreren Alkylalkoxysilanen (funktionalisierte Alkylalkoxysilane), deren Alkylgruppen mindestens eine Amino-, Carbonsäure-, Epoxy- oder Hydroxy-Gruppe tragen, basieren, dadurch gekennzeichnet, dass Silan-haltige Mischpolymerisate auf ethylenisch ungesättigten Monomeren basieren und Monomereinheiten von ethylenisch ungesättigten-Silanen enthalten.

Die hydrophobierenden Additive sind allgemein erhältlich durch Mischen von Silica, Silikonharzen und funktionalisierten Alkylalkoxysilanen. Die hydrophobierenden Additive können gegebenenfalls ein oder mehrere Emulgatoren enthalten.

Die Silikonharze sind vorzugsweise aufgebaut aus Einheiten der allgemeinen Formel RaSi (OR')_{b} (OH) _{c} O_{(4-a-b-c)/2}
mit a = 0 bis 3, b = 0 bis 3, c = 0 bis 3,
wobei die Summe a+b+c je Einheit ≤ 3,5, vorzugsweise < 3,5 ist, und wobei
die einzelnen Reste R gleiche oder verschiedene, verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeuten, und
die einzelnen Reste R' gleiche oder verschiedene Alkylreste oder Alkoxyalkylenreste mit jeweils 1 bis 4 C-Atomen, vorzugsweise Methyl und Ethyl bedeuten,
wobei die Reste R und R' auch mit Halogenen, wie Cl, Ether-, Thioether-, Ester-, Amid-, Nitril-, Hydroxyl-, Amin-, Carboxyl-, Sulfonsäure-, Carbonsäureanhydrid- und CarbonylGruppen substituiert sein können.

Bevorzugte Silikonharze sind erhältlich durch Kondensationsreaktion von
a) einem oder mehreren Alkyl-Alkoxy-Silanen der Formel SiRₙ(OR')₄₋ₙ mit 1 bis 3 C-Atomen im Alkylrest R, 1 bis 4 C-Atomen im Rest R' und n = 1 bis 3 oder
   einem oder mehreren Alkyl-Halogen-Silanen der Formel SiRₙ(Halogen)₄₋ₙ mit 1 bis 4 C-Atomen im Rest R, mit n = 1 bis 3 und beispielsweise Chlor als Halogen,
b) gegebenenfalls einem oder mehreren Alkyl-Alkoxy-Silanen der Formel SiRₙ(OR')₄₋ₘ
   mit 4 bis 18 C-Atomen im Alkylrest R, 1 bis 4 C-Atomen im Rest R' und m = 1 bis 3 und
c) gegebenenfalls einem oder mehreren weiteren Silanen.

Die Alkoxy-Gruppen (OR') der Silane haben vorzugsweise 1 bis 3 Kohlenstoff-Atome. Besonders bevorzugt sind Propoxy-Gruppen und insbesondere Methoxy- und Ethoxy-Gruppen.

Klarstellend sei angemerkt, dass die Silane c) von den Silanen a) und b) verschieden sind.

Für bevorzugte Silane a) ist n = 1 oder 2.

Beispiele für Silane a) sind Alkyl-Alkoxy-Silane, wie Methylalkoxysilane, Ethylalkoxysilane oder Propylalkoxysilane, oder Alkyl-Halogen-Silanen, wie Methylhalogensilane oder Ethylhalogensilane, deren Alkylreste gegebenenfalls substituiert sein können, beispielsweise mit Halogen-, Nitril- oder MercaptoGruppen.

Bevorzugte Silane a) sind Methyltrimethoxysilan, Methyltriethoxysilan, Methyltripropoxysilan, Dimethyldimethoxysilan, Dimethyldiethoxysilan, Dimethyldipropoxysilan, Methyltrichlorsilan, Dimethyldichlorsilan, Methyltri(ethoxyethoxy)-silan, Dipropyldiethoxysilan, γ-Chlorpropyltriethoxysilan, β-Nitrilethyltriethoxysilan, γ-Mercaptopropyltrimethoxysilan oder γ-Mercaptopropyltriethoxysilan.

Der Anteil der Silane a) mit n = 1 beträgt vorzugsweise 50 bis 99 Gew.-% und besonders bevorzugt 70 bis 99 Gew.-%, bezogen auf das Trockengewicht der Silikonharze.

Der Anteil der Silane a) mit n = 2 beträgt vorzugsweise 1 bis 50 Gew.-% und besonders bevorzugt 1 bis 30 Gew.-%, bezogen auf die Silane a).

Der Anteil der Silane a) beträgt vorzugsweise 50 bis 99,9 Gew.-%, insbesondere 70 bis 99 Gew.-%, bezogen auf das Trockengewicht der Silikonharze.

Für bevorzugte Silane b) ist m = 1 oder 2, insbesondere 1.

Beispiele für Silane b) sind Phenylalkoxysilane, Isooctylalkoxysilane, n-Octylalkoxysilane oder Hexadecylalkoxysilane.

Bevorzugte Silane b) sind Phenyltriethoxysilan, Methylphenyldiethoxysilan, Diphenyldimethoxysilan, Isooctyltriethoxysilan, n-Octyltriethoxysilan oder Hexadecyltriethoxysilan.

Der Anteil der Silane b) beträgt vorzugsweise 0,1 bis 50 Gew.-%, insbesondere 1 bis 30 Gew.-%, bezogen auf das Trockengewicht der Silikonharze.

Beispiele für Silane c) sind Kieselsäureester, vorzugsweise der Formel Si (OR')₄, Organosilanole, vorzugsweise der Formel SiRₒ (OH)₄₋ₒ. Der Parameter o kann hierbei beispielsweise Werte von 1 bis 3 annehmen. Bevorzugte Silane c) sind Tetramethoxysilan, Tetraethoxysilan.

Der Anteil der Silane c) kann beispielsweise 0 bis 20 Gew.-%, insbesondere 0,1 bis 10 Gew.-% betragen, bezogen auf das Trockengewicht der Silikonharze. Bevorzugte Silikonharze basieren nicht auf Silanen c).

Die Silikonharze liegen vorzugsweise in pastöser oder cremeartiger Form vor. Bei Silikonharzen handelt es sich allgemein nicht um Polydimethylsiloxane oder substituierte Polydimethylsiloxane.

Die hydrophobierenden Additive basieren bevorzugt zu 5 bis 90 Gew.-%, besonders bevorzugt 15 bis 80 Gew.-% und am meisten bevorzugt 25 bis 70 Gew.-% auf Silikonharz, bezogen auf das Trockengewicht der hydrophobierenden Additive.

Die erfindungsgemäß eingesetzten Silikonharze sind handelsübliche Produkte bzw. in der Siliziumchemie nach gängigen Methoden herstellbar, z. B. nach Verfahren wie sie in Noll, Chemie und Technologie der Silikone, 2. Auflage 1968, Weinheim, und in Houben-Weyl, Methoden der organischen Chemie, Band E20, Georg Thieme Verlag, Stuttgart (1987) beschrieben sind. Die genannten Silikonharze können alleine oder als Gemisch in den hydrophobierenden Additiven enthalten sein.

Das Silica wird zur Herstellung der hydrophobierenden Additive im Allgemeinen in Form von Solen eingesetzt. Silicasole sind allgemein Lösungen oder kolloidale Suspensionen von Siliciumdioxid-Partikeln (SiO₂) in wässrigem Medium. Die Silicasole umfassen vorzugsweise kolloidale Kieselsäure, Wasserglas oder Kieselsole. Die Silicasole enthalten als Lösungsmittel im Allgemeinen Wasser und vorzugsweise keine weiteren Lösungsmittel, wie organische Lösungsmittel. Die Silicasole liegen also nicht in fester Form vor. Die Silicasole haben im Allgemeinen pH-Werte von 7 bis 12, insbesondere von 7 bis 10.

Die Teilchengröße der Siliciumdioxid-Partikel beträgt vorzugsweise 1 bis 100 nm, besonders bevorzugt 3 bis 70 nm und am meisten bevorzugt 5 bis 50 nm (bestimmt mittels Transelektronenmikroskopie mit dem Gerät Libra 120 der Firma Zeiss).

Die Silicasole haben einen Feststoffgehalt von vorzugsweise 2 bis 50%, besonders bevorzugt 5 bis 50%, noch mehr bevorzugt 10 bis 50% und am meisten bevorzugt 20 bis 50%.

Die hydrophobierenden Additive basieren zu bevorzugt 10 bis 90 Gew.-%, besonders bevorzugt 20 bis 80 Gew.-% und am meisten bevorzugt 30 bis 70 Gew.-% auf Silica (fest), bezogen auf das Trockengewicht der hydrophobierenden Additive.

Die Herstellung von Silicasolen ist dem Fachmann allgemein bekannt. Silicasole können beispielsweise durch Hydrolyse von Tetraalkoxysilanen hergestellt werden, wie beispielsweise in DE-A 4124588 beschrieben. Besonders geeignet sind hierfür Tetramethoxysilane oder Tetraethoxysilane. Bei der Herstellung der Silicasole durch Hydrolyse können den Tetraalkoxysilanen beispielsweise bis zu 15 Gew.-%, vorzugsweise bis zu 10 Gew.-%, besonders bevorzugt bis zu 2 Gew.-% Organoalkoxysilane zugesetzt werden. Die Silicasole können aber auch ausschließlich auf Tetraalkoxysilanen basieren. Alternativ können Silicasole pyrogen durch Flammenhydrolyse, z.B. von Tetrachlorsilan, hergestellt werden, wie beispielsweise in DE 2620737 oder DE 4221716 beschrieben. Wasserglas ist beispielsweise erhältlich durch Zusammenschmelzen von Quarzsand mit Alkalicarbonaten bei 1400 bis 1500°C und anschließender Überführung in eine wässrige Lösung.

Funktionalisierte Alkylalkoxysilane sind beispielsweise solche der allgemeinen Formel

(R¹O)ₚSi (R²X)₄₋ₚ (I),

worin
R¹ ein Wasserstoffatom oder einen Kohlenwasserstoffrest mit 1 bis 18 Kohlenstoffatom, der durch ein oder mehrere voneinander separate Sauerstoffatome unterbrochen sein kann, oder einen Rest der Formel -COCH₃, -COC₂H₅ oder -CH₂CH₂OH bedeutet,
R² einen, gegebenenfalls substituierten, Alkylen-Rest mit 1 bis 20 Kohlenstoffatomen, vorzugsweise mit 1 bis 6 Kohlenstoffatomen bedeutet, in dem einander nicht benachbarte Methyleneinheiten durch Sauerstoff ersetzt sein können, und
X über eine kovalente Bindung an R² gebunden ist und für einen Aminorest -NHR³, einen Epoxyrest -CR⁴ (O) CR⁵R⁶, einen Carbonsäurerest -COOH oder einen Hydroxyrest -OH steht, wobei
R³ ein Wasserstoffatom oder einen gegebenenfalls substituierten Alkyl-, Aryl- oder Aminoalkyrest mit 1 bis 10 Kohlenstoff-atomen bedeutet,
R⁴, R⁵, R⁶ ein Wasserstoffatom oder einen gegebenenfalls substituierten Alkyl- oder Arylrest mit 1 bis 10 Kohlenstoffatomen bedeutet,
wobei die jeweiligen Reste R¹, R², R³, R⁴, R⁵ und R⁶ ihre Werte jeweils unabhängig voneinander annehmen, und
wobei R²X über ein Kohlenstoffatom des Restes R² an das Siliciumatom der Formel I gebunden ist.

Beispiele für Kohlenwasserstoffreste R¹ der Formel I sind Alkylreste, wie der Methyl-, Ethyl-, n-Propyl-, Isopropyl-, n-Butyl-, sec.-Butyl-, Amyl-, Hexyl-, ß-Ethylhexyl-, Heptyl-, Octyl-, iso-Octyl- und Octadecylrest; Alkenylreste, wie der Vinyl- und Allylrest und Butenylreste; Alkinylreste; Cycloalkylreste, wie der Cyclobutyl- und Cyclohexylrest und Methylcyclohexylreste; Arylreste, wie der Phenylrest; Alkarylreste, wie Tolylreste; und Aralkylreste, wie der Benzylrest. Besonders bevorzugt sind der Methyl-, Ethyl-, Vinyl- und Phenylrest.

Die Reste R² der Gruppe R²X der funktionalisierten Alkylalkoxysilane der Formel I sind vorzugsweise nicht substituiert. Besonders bevorzugt steht R² für einen Alkylen-Rest mit 1 bis 6 Kohlenstoffatomen, am meisten bevorzugt für Methylen, Ethylen oder Propylen.

Vorzugsweise steht R³ für ein Wasserstoffatom, einen Alkyl-, Aryl- oder Aminoalkyrest mit 1 bis 6 Kohlenstoffatomen, besonders bevorzugt Wasserstoffatom, 2-Aminoethyl, Phenyl, Cyclohexyl, Methyl, Ethyl, Propyl oder Butyl. Die Reste R⁴, R⁵, R⁷ stehen vorzugsweise für ein Wasserstoffatom.

Für bevorzugte funktionalisierte Alkylalkoxysilane nimmt p Werte von 1 bis 3, insbesondere von 1 oder 2 an.

Die einzelnen Reste R¹, R², R³, R⁴, R⁵, R⁶ bzw. X sowie p der Verbindungen der Formel I nehmen ihre Bedeutungen jeweils unabhängig voneinander an. In allen Ausführungsformen der Formel I ist das Siliciumatom jeweils vierwertig.

Bevorzugt sind Aminoalkylentrialkoxysilane und insbesondere Glycidoxyalkylentrialkoxysilane der Formel I. Beispiele für bevorzugte funktionalisierte Alkylalkoxysilane der Formel I sind (3-Aminopropyl)triethoxysilan, (3-Aminopropyl)trimethoxysilan, N-(2-Aminoethyl)(3-Aminopropyl)triethoxysilan, N-(2-Aminoethyl)(3-Aminopropyl)trimethoxysilan, N-(2-Aminoethyl) (3-Aminopropyl)methyldimethoxysilan, N-Cyclohexylaminomethylmethyldiethoxysilan, (3-Glycidoxypropyl)triethoxysilan, 3-Glycidoxypropyl)trimethoxysilan. Bevorzugt sind (3-Aminopropyl)triethoxysilan und 3-Glycidoxypropyl) triethoxysilan. Besonders bevorzugt sind Epoxyreste, insbesondere (3-Glycidoxypropyl) triethoxysilan.

Zur Herstellung der hydrophobierenden Additive werden die funktionalisierten Alkylalkoxysilane vorzugsweise zu 0,1 bis 10 Gew.-%, besonders bevorzugt 1 bis 9 Gew.-% und am meisten bevorzugt 2,0 bis 8 Gew.-% eingesetzt, bezogen auf das Trockengewicht des Silica.

Zur Herstellung der hydrophobierenden Additive werden die funktionalisierten Alkylalkoxysilane vorzugsweise zu 0,1 bis 10 Gew.-%, besonders bevorzugt 0,5 bis 8 Gew.-% und am meisten bevorzugt 1 bis 6 Gew.-% eingesetzt, bezogen auf das Trockengewicht aus Silikonharzen und Silica.

In den hydrophobierenden Additiven sind die funktionalisierten Alkylalkoxysilane vorzugsweise über Siloxan-Bindungen (Si-O-Si) kovalent mit Silica und/oder Silikonharzen verbunden. Vorzugsweise sind die funktionalisierten Alkylalkoxysilane nicht über ein Kohlenstoffatom mit Silica und/oder Silikonharzen verbunden.

Des Weiteren können die hydrophobierenden Additive Emulgatoren enthalten. Geeignet sind allgemein anionische, kationische oder nichtionische Emulgatoren. Beispiele für anionische Tenside sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Beispiele für nichtionische Tenside sind Alkylpolyglykolether; Alkylarylpolyglykolether mit 8 bis 40 Ethylenoxid-Einheiten; oder Polydimethylsiloxanbasierte Emulgatoren, wie Polyethylen- oder Polypropylen substituierte Polydimethylsiloxane, insbesonde Cetyl-Polyethylen-oder Cetyl-Polypropylen substituierte Polydimethylsiloxane, oder Glyceryl/Lauryl substituierte Polydimethylsiloxane.

Vorzugsweise sind 0 bis 15 Gew.-% und besonders bevorzugt 1 bis 10 Gew.-% Emulgatoren enthalten, bezogen auf das Trockengewicht der hydrophobierenden Additive.

Die hydrophobierenden Additive können auch ein oder mehrere Schutzkolloide enthalten. Der Anteil der Schutzkolloide beträgt beispielsweise 1 bis 20 Gew.-%, vorzugsweise ≤ 1 Gew.-% und besonders bevorzugt ≤ 0,5 Gew.-%, bezogen auf das Trockengewicht der hydrophobierenden Additive. Am meisten bevorzugt sind keine Schutzkolloide enthalten.

Beispiele für Schutzkolloide sind Polyvinylpyrrolidone; Polyvinylacetale; Polysaccharide in wasserlöslicher Form wie Stärken (Amylose und Amylopectin), Cellulosen oder deren Derivate, wie Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly-(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere, insbesondere teilverseifte oder vollverseifte Polyvinylalkohole. Die Schutzkolloide sind im Handel erhältlich und mittels dem Fachmann bekannter Verfahren zugänglich.

Des Weiteren können die hydrophobierenden Additive ein oder mehrere weitere Zusatzstoffe enthalten, wie beispielsweise weitere Bindemittel, Pigmente, Füllstoffe, insbesondere Zeolithe, Verdicker, Entschäumer, Schaumstabilisatoren, Luftporenbildner oder Konservierungsmittel.

Die hydrophobierenden Additive haben eine Viskosität von vorzugsweise 1,5 bis 1000 mPas, besonders bevorzugt 2 bis 500 mPas und am meisten bevorzugt 4 bis 200 mPas (bestimmt mit einem Brookfieldviskosimeter, bei 20°C, als 40%ige Dispersion in Wasser, unter Verwendung von Spindel 1 bzw. 2 bei 20 Umdrehungen pro Minute).

Die hydrophobierenden Additive liegen beispielsweise in Form von Dispersionen, insbesondere wässrigen Dispersionen vor.

Der Feststoffgehalt der hydrophobierenden Additive in Form von Dispersionen liegt bei vorzugsweise 10 bis 70 Gew.-%, besonders bevorzugt von 25 bis 65 Gew.-% und am meisten bevorzugt von 30 bis 60 Gew.-%.

Alternativ können die hydrophobierenden Additive auch in Form von Pulvern vorliegen.

Die hydrophobierenden Additive sind allgemein er-hältlich, indem Silica, ein oder mehrere Silikonharze und ein oder mehrere Alkylalkoxysilane (funktionalisierte Alkylalkoxysilane), deren Alkylgruppen mindestens eine Amino-, Carbonsäure-, Epoxy- oder Hydroxy-Gruppe tragen, gemischt werden.

Die einzelnen Komponenten zur Herstellung der hydrophobierenden Additive können in beliebiger Reihenfolge gemischt werden. Es können einzelne oder alle Komponenten vorgelegt oder ganz oder teilweise, räumlich getrennt oder räumlich gemeinsam zudosiert werden. Es können die auf dem vorliegenden technischen Gebiet gängigen Mischvorrichtungen eingesetzt werden.

Die Silikonharze und die funktionalisierten Alkylalkoxysilane können beispielsweise in reiner Form oder in einem Lösungsmittel, insbesondere in Wasser, vorzugsweise in Form einer wässrigen Dispersion oder Emulsion, eingesetzt werden. Silica wird vorzugsweise in Form von wässrigen Silicasolen eingesetzt.

Das Mischen erfolgt vorzugsweise bei 5 bis 70°C, besonders bevorzugt 15 bis 65°C und am meisten bevorzugt 35 bis 60°C. Die genannten Temperaturen sind besonders vorteilhaft, um stabile Produkte zu erhalten.

Der pH-Wert beim Mischen liegt vorzugsweise zwischen 6 und 14, besonders bevorzugt zwischen 7 und 12 und am meisten bevorzugt zwischen 8 und 11. Der pH-Wert kann in bekannter Weise durch organische oder anorganische Säuren, Basen oder Puffer eingestellt werden, wie beispielsweise durch Zugabe von Salzsäure, Ammoniak oder Alkalihydroxiden, beispielsweise Natronlauge.

Die Dauer des Mischens beträgt beispielsweise 1 bis 10 Stunden, vorzugsweise 2 bis 8 Stunden und besonders bevorzugt 2 bis 8 Stunden oder 3 bis 6 Stunden. Falls das Mischen bei Temperaturen von ≥ 30°C erfolgt, beträgt die Dauer des Mischens vorzugsweise 2 bis 6 Stunden und besonders bevorzugt 3 bis 5 Stunden. Falls das Mischen bei Temperaturen von < 30°C erfolgt, beträgt die Dauer des Mischens vorzugsweise 4 bis 8 Stunden und besonders bevorzugt 5 bis 7 Stunden.

Das Mischen erfolgt vorzugsweise in wässrigem Medium. Vorzugsweise wird als Lösungsmittel ausschließlich Wasser eingesetzt.

So erhältliche hydrophobierende Additive liegen vorzugsweise in Form von Dispersionen, insbesondere wässrigen Dispersionen vor.

Zur Herstellung der hydrophobierenden Additive in Form von Pulvern können Dispersionen der hydrophobierenden Additive getrocknet werden, vorzugsweise unter Zusatz von Trocknungshilfe. Geeignete Trocknungshilfsmittel sind beispielsweise die oben genannten Schutzkolloide, insbesondere Polyvinylalkohol. Geeignete Trocknungsverfahren sind beispielsweise die Wirbelschichttrocknung, die Walzentrocknung, die Gefriertrocknung oder die Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt zwischen 60°C bis 90°C gewählt.

Bei der Trocknung hat sich vielfach ein Gehalt von bis zu 1.5 Gew.-% Antischaummittel, bezogen auf den Feststoffgehalt der Dispersion, als günstig erwiesen. Zur Erhöhung der Lagerfähigkeit durch Verbesserung der Verblockungsstabilität kann das erhaltene Pulver mit einem Antiblockmittel (Antibackmittel), vorzugsweise bis 30 Gew.-%, bezogen auf den Feststoffgehalt der Dispersion, ausgerüstet werden. Beispiele für Antiblockmittel sind Ca- bzw. Mg-Carbonat, Talk, Gips, Kieselsäuren wie beispielsweise hochdisperse Kieselsäuren, Kaoline, Metakaolin, calciniertes Kaolin, Silicate mit Teilchengrößen vorzugsweise im Bereich von 10 nm bis 100 µm.

Weitere Zusatzstoffe werden vorzugsweise während oder nach der Trocknung der Dispersion zugegeben.

Die Viskosität der zu trocknenden Dispersion kann beispielsweise über den Feststoffgehalt so eingestellt werden, dass ein Wert von ≤ 1500 mPas (Brookfield-Viskosität bei 20 Umdrehungen und 23°C), bevorzugt ≤ 500 mPas, erhalten wird.

Die Polymerzusammensetzungen enthalten vorzugsweise 1 bis 40 Gew.-%, besonders bevorzugt 2 bis 30 Gew.-% und am meisten bevorzugt 5 bis 25 Gew.-% hydrophobierende Additive, bezogen auf das Trockengewicht der Polymerzusammensetzungen (das heißt trocken/trocken) .

Die Polymerzusammensetzungen enthalten vorzugsweise 60 bis 99 Gew.-%, besonders bevorzugt 70 bis 98 Gew.-% und am meisten bevorzugt 75 bis 95 Gew.-% Silan-haltige Mischpolymerisate die auf ethylenisch ungesättigten Monomeren basieren basieren und Monomereinheiten von ethylenisch ungesättigten Silanen enthalten, insbesondere Silan-haltige Mischpolymerisate in Form von Schutzkolloid-stabilisierten wässrigen Dispersionen oder vorzugsweise in Form von Schutzkolloid-stabilisierten Pulvern, bezogen auf das Trockengewicht der Polymerzusammensetzungen (das heißt trocken/trocken).

Der Feststoffgehalt der Polymerzusammensetzungen in Form von Dispersionen liegt bei vorzugsweise 10 bis 70 Gew.-%, besonders bevorzugt von 30 bis 65 Gew.-% und am meisten bevorzugt von 40 bis 60 Gew.-%.

Die Polymerzusammensetzungen liegen vorzugsweise in trockener Form, insbesondere in Form von in Wasser redispergierbaren Pulvern vor.

Geeignete ethylenisch ungesättigte Monomere sind bei-spielsweise Vinylester, (Meth)acrylsäureester, Vinylaromaten, Olefine, 1,3-Diene und Vinyl-halogenide und ethylenisch ungesättigte Silane.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomere aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Ethylenisch unge-sättigte Silane sind beispielsweise solche der allgemeinen Formel (1) R⁷SiR⁸₀₋₂ (OR⁹) ₁₋₃, worin R⁷ die Bedeutung CH₂=CP¹⁰-(CH₂)₀₋₁ oder CH₂₌CR¹⁰CO₂ (CH₂)₁₋₃ hat, R⁸ die Bedeutung Ci- bis C₃-Alkylrest, C₁- bis C₃-Alkoxyrest oder Halogen, vorzugsweise Cl oder Br hat, R⁹ ein unverzweigter oder verzweigter, gegebenenfalls substituierter Alkylrest mit 1 bis 12 C-Atomen, vorzugsweise 1 bis 3 C-Atomen, oder ein Acylrest mit 2 bis 12 C-Atomen ist, wobei R⁹ gegebenenfalls durch eine Ethergruppe unterbrochen sein kann, und R¹⁰ für H oder CH₃ steht.

Polymerisate, die Monomereinheiten von ethylenisch ungesättigten Silanen enthalten, werden auch als Silan-haltige Mischpolymerisate bezeichnet.

Bevorzugte ethylenisch ungesättigte Silane der Formel (1) sind γ-Acryl- bzw. γ-Methacryloxypropyltri (alkoxy) silane, α-Meth-acryloxymethyltri(alkoxy)silane, γ-Methacryloxypropyl-methyl-di(alkoxy)silane; Vinylsilane wie Vinylalkyldi(alkoxy) silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte ungesättigte Silane der Formel (1) sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)-silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Als ethylenisch ungesättigte Silane der Formel (1) werden besonders bevorzugt Vinyltrimethoxysilan, Vinylmethyldimethoxysilan, Vinyltriethoxysilan, Vinylmethyldiethoxysilan, Vinyl-tris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Die Polymere basieren zu vorzugsweise 0 bis 5 Gew.-%, besonders bevorzugt 0,1 bis 3 Gew.-% und am meisten bevorzugt 0,3 bis 2 Gew.-% auf ethylenisch ungesättigten Silanen, bezogen auf das Gesamtgewicht der Polymere
Gegebenenfalls können noch 1 bis 15 Gew.-%, vorzugsweise 2 bis 15 Gew.-%, besonders bevorzugt 3 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, dass im Allgemeinen eine Glasübergangstemperatur Tg von -50°C bis +50°C, bevorzugt von - 20°C bis +30°C, resultiert. Die Glasübergangstemperatur Tg der Polymerisate kann in bekannter Weise mittels DSC (Dynamische Differenz-Thermoanalyse, DIN EN ISO 11357-1/2), beispielsweise mit dem dynamischen Differenzkalorimeter DSC1 der Firma Mettler-Toledo im offenen Tiegel bei einer Heizrate von 10 K/min bestimmt werden. Als Glasübergangstemperatur wird im Wärmeflussdiagramm die Temperatur am Mittelpunkt der Stufe (Mittelpunkt = halbe Stufenhöhe der Stufe des Wärmeflusses) der zweiten Aufheizkurve ausgewertet. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/T₉₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt werden Silan-haltige Mischpolymerisate von Vinylacetat mit 1 bis 50 Gew.-% Ethylen; Silan-haltige Mischpolymerisate Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Silan-haltige Mischpolymerisate von Vinylacetat, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesondere n-Butylacrylat oder 2-Ethylhexylacrylat; und Silan-haltige Mischpolymerisate 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten; Silan-haltige Mischpolymerisate mit Vinylacetat, 1 bis 50 Gew.-% Ethylen und 1 bis 60 Gew.-% Vinylchlorid; wobei die Silan-haltigen Mischpolymerisate noch die genannten ethylenisch ungesättigten Silane und gegebenenfalls Hilfsmonomere in den genannten Mengen enthalten und sich die Angaben in Gew.-% auf jeweils 100 Gew.-% aufaddieren.

Bevorzugt werden auch Silan-haltige Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Silan-haltigen Mischpolymerisate noch die genannten ethylenisch ungesättigten Silane und gegebenenfalls Hilfsmonomere in den genannten Mengen enthalten und sich die Angaben in Gew.-% auf jeweils 100 Gew.-% aufaddieren.

Besonders bevorzugt werden Silan-haltige Mischpolymerisate mit Vinylacetat und 5 bis 50 Gew.-% Ethylen, oder Silan-haltige Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen, oder Silan-haltige Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten, oder Silan-haltige Mischpolymerisate mit Vinylacetat, 5 bis 50 Gew.-% Ethylen und 1 bis 60 Gew.-% Vinylchlorid; wobei die Silan-haltigen Mischpolymerisate noch die genannten ethylenisch ungesättigten Silane und gegebenenfalls Hilfsmonomere in den genannten Mengen enthalten und sich die Angaben in Gew.-% auf jeweils 100 Gew.-% aufaddieren.

Besonders bevorzugt werden als Silan-haltige Mischpolymerisate Mischpolymerisate von Vinylestern, insbesondere Vinylacetat, mit 0,1 bis 5 Gew.-%, vorzugsweise 0,1 bis 3 Gew.-%, besonders bevorzugt 0,2 bis 2 Gew.-% an ethylenisch ungesättigten Silanen, wie Vinyltrimethoxysilan, Vinyltriethoxysilan, Vinylmethyldimethoxysilan oder Vinylmethyldiethoxysilan, und gegebenenfalls 1 bis 15 Gew.-%, vorzugsweise 2 bis 15 Gew.-%, besonders bevorzugt 3 bis 10 Gew.-% an ethylenisch ungesättigten Carbonsäuren, wie Crotonsäure, Fumarsäure, Vinylsulfonsäure, Vinylbenzolsulfonsäure, Acryl-amido-2-methylpropansulfonsäure, insbesondere Acrylsäure, Methacrylsäure, Itaconsäure und Maleinsäure; wobei die genannten Mischpolymerisate noch 5 bis 45 Gew.-% an Buthylacrylat, Ethylen oder Vinylestern von α-verzweigten Monocarbonsäuren mit 9 bis 11 C-Atomen, wie VeoVa9 oder VeoVa10, enthalten können, und wobei sich die Angaben in Gew.-% auf jeweils 100 Gew.-% aufaddieren.

Besonders bevorzugt werden als Silan-haltige Mischpolymerisate auch Mischpolymerisate von (Meth)acrylsäureestern, wie Methyl(meth)acrylat und/oder n-Butyl(meth)acrylat, 0,1 bis 5 Gew.-%, vorzugsweise 0,1 bis 3 Gew.-%, besonders bevorzugt 0,2 bis 2 Gew.-% an ethylenisch ungesättigten Silanen, wie Vinyltrimethoxysilan, Vinyltriethoxysilan, Vinylmethyldimethoxysilan oder Vinylmethyldiethoxysilan, und gegebenenfalls 1 bis 15 Gew.-%, vorzugsweise 2 bis 15 Gew.-%, besonders bevorzugt 3 bis 10 Gew.-% an ethylenisch ungesättigten Carbonsäuren, wie Crotonsäure, Fumarsäure, Vinylsulfonsäure, Vinylbenzolsulfonsäure, Acryl-amido-2-methylpropansulfonsäure, insbesondere Acrylsäure, Methacrylsäure, Itaconsäure und Maleinsäure; wobei die genannten Mischpolymerisate noch 0 bis 50 Gew.-%, vorzugsweise 0,1 bis 50 Gew.-%, besonders bevorzugt 1 bis 30 Gew.-% an Styrol enthalten können, und wobei sich die Angaben in Gew.-% auf jeweils 100 Gew.-% aufaddieren.

Die Herstellung der Silan-haltigen Mischpolymerisate erfolgt im Allgemeinen in wässrigem Medium und bevorzugt nach dem Suspensions- oder insbesondere nach dem Emulsionspolymerisationsverfahren - wie beispielsweise in DE-A 102008043988 beschrieben. Die Silan-haltigen Mischpolymerisate fallen dabei in Form von wässrigen Dispersionen an. Bei der Polymerisation können die gängigen Emulgatoren und/oder vorzugsweise Schutzkolloide eingesetzt werden, insbesondere die oben genannten Emulgatoren oder Schutzkolloide, wie in der DE-A 102008043988 beschrieben. Bevorzugt sind also Silan-haltige Mischpolymerisate in Form von Schutzkolloid-stabilisierten wässrigen Dispersionen. Die wässrigen Dispersionen enthalten insgesamt vorzugsweise 1 bis 20 Gew.-% Schutzkolloide, bezogen auf das Gesamtgewicht der Monomere zugesetzt.

Die Silan-haltigen Mischpolymerisate in Form von wässrigen Dispersionen können in Wasser redispergierbare Pulver überführt werden, analog wie weiter oben für die Trocknung zur Herstellung der hydrophobierenden Additive in Form von Pulvern beschrieben. Die redispergierbaren Pulver enthalten in der Regel eine Trocknungshilfe in einer Gesamtmenge von 3 bis 30 Gew.-%, vorzugsweise 5 bis 20 Gew.-%, bezogen auf das Gesamtgewicht der redispergierbaren Polymerpulver. Als Trocknungshilfe sind die oben genannten Polyvinylalkohole bevorzugt. Bevorzugt sind also Silan-haltige Mischpolymerisate in Form von Schutzkolloid-stabilisierten, in Wasser redispergierbaren Pulvern.

Die Viskosität der zu verdüsenden Speise wird über den Feststoffgehalt so eingestellt, dass üblicherweise ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt vorzugsweise 30 bis 75 Gew.-% und besonders bevorzugt 50 bis 60 Gew.-%.

Die Silan-haltige Mischpolymerisate in Form von in Wasser redispergierbaren Pulvern können zusätzlich die oben genannten Antischaummittel, Antiblockmitteln (Antibackmittel) und gegebenenfalls Zusatzstoffe enthalten, beispielsweise in den oben genannten Mengen.

Ein weiterer Gegenstand der Erfindung sind Verfahren zur Herstellung der Polymerzusammensetzungen, dadurch gekennzeichnet, dass ein oder mehrere hydrophobierende Additive oder deren einzelne Bestandteile mit einem oder mehreren Silan-haltigen Mischpolymerisaten gemischt werden.

Das Mischen der Silan-haltigen Mischpolymerisate und der hydrophobierenden Additive oder das Mischen der Silan-haltigen Mischpolymerisate und der einzelnen Bestandteile der hydrophobierenden Additive ist an keine besondere Vorgehensweise oder Vorrichtung gebunden und kann in herkömmlicher Weise in den gängigen Mischbehältern erfolgen.

Beispielsweise können hydrophobierende Additive in Form von wässri-gen Dispersionen oder Pulvern und Silan-haltige Mischpolymerisate in Form von wässrigen Dispersionen oder in Wasser redispergierbaren Pulvern gemischt werden. Vorzugsweise werden hydrophobierende Additive in Form von wässrigen Dispersionen und Silan-haltige Mischpolymerisate in Form von wässrigen Dispersionen oder in Wasser redispergierbaren Pulvern gemischt und anschließend gegebenenfalls getrocknet. Es können auch Silica, Silikonharze, funktionalisierte Alkylalkoxysilane sowie gegebenenfalls Emulgatoren separat oder in vorgemischter Form, gegebenenfalls in wässrigem Lösungsmittel, mit Silan-haltigen Mischpolymerisaten in Form von wässrigen Dispersionen oder in Wasser redispergierbaren Pulvern gemischt und anschließend gegebenenfalls getrocknet werden. Das Trocknen kann hierbei erfolgen, wie weiter oben für die hydrophobierenden Additive beziehungsweise für die Silan-haltigen Mischpolymerisate beschrieben, gegebenenfalls unter Zusatz von Antischaummitteln, Antiblockmitteln oder den oben genannten Zusatzstoffen. Vorzugsweise werden vor dem Trocknen ein oder mehrere Schutzkolloide zugegeben.

Ein weiterer Gegenstand der Erfindung sind Kompositpartikel enthaltende Zusammensetzungen basierend auf Silica, einem oder mehreren Silikonharzen, einem oder mehreren Alkylalkoxysilanen (funktionalisierte Alkylalkoxysilane), deren Alkylgruppen mindestens eine Amino-, Carbonsäure-, Epoxy- oder Hydroxy-Gruppe tragen, und einem oder mehreren Silan-haltigen Mischpolymerisaten, insbesondere einem oder mehreren Schutzkolloid-stabilisierten Silan-haltigen Mischpolymerisaten, gegebenenfalls einem oder mehreren Emulgatoren, wobei ein oder mehrere Kompositpartikel enthalten sind, die erhältlich sind durch Kondensation von Silica und/oder Silikonharzen mit einem oder mehreren Silan-haltigen Mischpolymerisaten, insbesondere einem oder mehreren Schutzkolloid-stabilisierten Silan-haltigen Mischpolymerisaten, in einem wässrigen Lösungsmittel, wobei in Folge der Kondensation ein oder mehrere Silan-haltige Mischpolymerisate auf Silica und/oder Silikonharze fixiert werden.

Kompositpartikel enthalten allgemein organische und anorganische Domänen, wie beispielsweise eine organische Polymermatrix und daran fixierte anorganische Domänen, wie Silica oder Silikonharze. Kompositpartikel haben üblicherweise Durchmesser von 4 bis 5000 nm. In Folge der erfindungsgemäßen Kondensation werden die organischen Domänen im Wesentlichen durch die Silan-haltigen Mischpolymerisate und die anorganischen Domänen im Wesentlichen durch Silica und/oder Silikonharze gebildet.

Die Kompositpartikel sind in den Kompositpartikel enthaltenden Zusammensetzungen zu vorzugsweise ≥ 70 Gew.-%, besonders bevorzugt 75 bis 99 Gew.-% und am meisten bevorzugt 80 bis 95 Gew.-% enthalten, bezogen auf das Trockengewicht der Kompositpartikel enthaltenden Zusammensetzungen.

Die Kompositpartikel enthaltenden Zusammensetzungen basieren vorzugsweise auf 70 bis 95 Gew.-%, insbesondere 75 bis 90 Gew.-% an Silan-haltigen Mischpolymerisaten, insbesondere Schutzkolloid-stabilisierten Silan-haltigen Mischpolymerisaten, bezogen auf das Trockengewicht der Kompositpartikel enthaltenden Zusammensetzungen.

Die Kompositpartikel enthaltenden Zusammensetzungen basieren vorzugsweise auf 2 bis 40 Gew.-%, insbesondere 5 bis 15 Gew.-% an Silica (fest), bezogen auf das Trockengewicht der Kompositpartikel enthaltenden Zusammensetzungen.

Die Kompositpartikel enthaltenden Zusammensetzungen basieren vorzugsweise auf 10 bis 85 Gew.-%, insbesondere 25 bis 70 Gew.-% Silikonharz, 10 bis 85 Gew.-%, insbesondere 25 bis 70 Gew.-% Silica (fest), bezogen auf das Trockengewicht von Silikonharz, Silica und den funktionalisierten Alkylalkoxysilanen.

Die Kompositpartikel enthaltenden Zusammensetzungen basieren vorzugsweise auf 0,1 bis 10 Gew.-%, insbesondere 1 bis 6 Gew.-% an funktionalisierten Alkylalkoxysilanen, bezogen auf das Trockengewicht aus Silikonharzen und Silica.

Gegebenenfalls können die Kompositpartikel enthaltenden Zusammensetzungen noch 0 bis 15 Gew.-%, insbesondere 1 bis 10 Gew.-% an Emulgatoren enthalten, bezogen auf das Trockengewicht von Silikonharz, Silica und funktionalisierten Alkylalkoxysilanen.

Die wässrigen Lösungsmittel enthalten vorzugsweise Wasser und gegebenenfalls ein oder mehrere organische Lösungsmittel. Beispiele für organische Lösungsmittel sind Alkohole mit 1 bis 6 Kohlenstoff-Atomen, wie Methanol, Ethanol, n-Propanol oder i-Propanol, Ketone, wie Aceton oder Methylethylketon, Ester, wie Methylacetat, Ethylacetat, Propylacetat oder Butylacetat. Besonders bevorzugte wässrige Lösungsmittel enthalten ≤ 40 Gew.-%, besonders bevorzugt ≤ 20 Gew.-% und am meisten bevorzugt ≤ 10 Gew.-% an organischen Lösungsmitteln, bezogen auf das Gesamtgewicht der wässrigen Lösungsmittel. Am meisten werden zur Herstellung der Kompositpartikel enthaltenden Zusammensetzungen wässrige Lösungsmittel eingesetzt, die keine organischen Lösungsmittel enthalten.

Die Kompositpartikel enthaltenden Zusammensetzungen können zusätzlich die oben genannten Zusatzstoffe beispielsweise in den oben genannten Mengen enthalten.

Die Kompositpartikel enthaltenden Zusammensetzungen können beispielsweise in Form von wässrigen Dispersionen oder in Form von in Wasser redispergierbaren Pulvern vorliegen.

Der Feststoffgehalt der Kompositpartikel enthaltenden Zusammensetzungen in Form von wässrigen Dispersionen liegt bei vorzugsweise 10 bis 70 Gew.-%, besonders bevorzugt von 30 bis 65 Gew.-% und am meisten bevorzugt von 40 bis 60 Gew.-%.

Die Kompositpartikel enthaltenden Zusammensetzungen in Form von in Wasser redispergierbaren Pulvern können zusätzlich die oben genannten Antischaummittel, Antiblockmitteln (Antibackmittel) und gegebenenfalls Zusatzstoffe beispielsweise in den oben genannten Mengen enthalten.

Die Kompositpartikel enthaltenden Zusammensetzungen können hergestellt werden durch Mischen von Silica, einem oder mehreren Silikonharzen, einem oder mehreren Alkylalkoxysilanen (funktionalisierte Alkylalkoxysilane), deren Alkylgruppen mindestens eine Amino-, Carbonsäure-, Epoxy- oder Hydroxy-Gruppe tragen, und einem oder mehreren Silan-haltigen Mischpolymerisaten, insbesondere einem oder mehreren Schutzkolloid-stabilisierten Silan-haltigen Mischpolymerisaten in einem wässrigen Lösungsmittel, wobei Kompositpartikel gebildet werden durch Kondensationsreaktion von Silica und/oder Silikonharzen mit Silan-haltigen Mischpolymerisaten, insbesondere Schutzkolloid-stabilisierten Silan-haltigen Mischpolymerisaten, wobei in Folge der Kondensationsreaktion Silan-haltige Mischpolymerisate auf Silica und/oder Silikonharzen fixiert werden.

Das Kondensieren der Silan-haltigen Mischpolymerisate auf Silica und/oder Silikonharzen beziehungsweise das Mischen der einzelnen Bestandteile der Kompositpartikel enthaltenden Zusammensetzungen kann in analoger Weise und den Bedingungen erfolgen, wie weiter oben für die Herstellung der Polymerzusammensetzungen oder der hydrophobierenden Additive beschrieben. Die Kompositpartikel können in situ während des Mischens der einzelnen Bestandteile der Kompositpartikel enthaltenden Zusammensetzungen gebildet werden. Alternativ ist es auch möglich, zuerst die Kompositpartikel mittels Kondensieren von Silica und/oder Silikonharzen mit Silan-haltigen Mischpolymerisaten herzustellen, und anschließend die so hergestellten Kompositpartikel mit den weiteren Bestandteilen der Kompositpartikel zu mischen. Das Mischen erfolgt vorzugsweise in Gegenwart von einem oder mehreren Emulgatoren.

Die Kompositpartikel enthaltenden Zusammensetzungen in Form von wässrigen Dispersionen können durch Trocknen in Kompositpartikel enthaltende Zusammensetzungen in Form von in Wasser redispergierbaren Pulvern überführt werden. Das Trocknen kann beispielsweise erfolgen, wie weiter oben für die hydrophobierenden Additive beziehungsweise für Polymere beschrieben, gegebenenfalls unter Zusatz von Antischaummitteln, Antiblockmitteln oder den oben genannten Zusatzstoffen.

Die erfindungsgemäßen Polymerzusammensetzungen beziehungsweise Kompositpartikel enthaltenden Zusammensetzungen können direkt als Klarlack oder allgemein auch als Bindemittel verwendet werden oder eignen sich als Additiv für Beschichtungsmittel. Solche Beschichtungsmittel sind vorzugsweise zementfrei, beziehungsweise allgemein Beschichtungsmittel, die keine hydraulisch abbindenden Bindemittel enthalten. Entsprechende Beschichtungsmittel können beispielsweise als Farben, Lacke oder Lasuren dienen, beispielsweise für mineralische Untergründe, wie Beton, Estriche, Putz oder Gips, Keramik, Natur- oder Kunststein und insbesondere für Holz oder Holzwerkstoffe, beispielsweise Holzwandvertäfelungen oder Möbel. Die Beschichtungsmittel können aber auch bei der Faser-, Textil-oder Papier-Beschichtung Einsatz finden.

Mit erfindungsgemäß hydrophobierten Beschichtungsmitteln kann die Oberfläche von Substraten hydrophobiert werden.

Die erfindungsgemäß zugänglichen Beschichtungen sind hydrophob, das heißt wasserabweisend, und dennoch Wasserdampfdurchlässig. Zudem sind Beschichtungen mit verbesserter Thermostabilität oder verbesserter Wasser-, Brand- oder mechanischer Beständigkeit zugänglich.

Überraschenderweise machen die erfindungsgemäßen Beschichtungsmittel polymerhaltige, hydrophobierte Beschichtungen mit geringerer Oberflächenklebrigkeit zugänglich. Entsprechende Beschichtungen haben beim Erwärmen auch eine reduzierte Neigung zum Erweichen. Darüber hinaus kommt es beim Applizieren der Beschichtungsmittel auf Substraten weniger zu Verlaufsstörungen, weswegen an der Oberfläche der Beschichtungen weniger sogenannte Fischaugen und damit Beschichtungen mit homogenerem Erscheinungsbild gebildet werden. Diese Effekte manifestieren sich umso signifikanter, je größere Anteile an erfindungsgemäßen Zusammensetzungen die Beschichtungsmittel enthalten. Auch im Falle unpigmentierter Beschichtungsmittel manifestieren sich diese Effekte in besonders deutlichem Maße. Das Silica, die Silikonharze und die funktionalisierten Alkylalkoxysilane beziehungsweise die erfindungsgemäßen Kompositpartikel tragen zu all diesen Effekten in synergistischer Weise bei.

Von Vorteil ist auch, dass die erfindungsgemäßen Zusammensetzungen in fester Form zugänglich sind. Dies erleichtert die Handhabung der Produkte bei der Applikation. Herkömmliche hydrophobierende Additive, wie beispielsweise Silikone, können dagegen flüssig sein oder gar in Form von honigartigen, zähen Pasten vorliegen, was bei Anwendern verpönt ist.

Darüber hinaus weisen die erfindungsgemäßen Zusammensetzungen sowie Beschichtungsmittel eine überraschend hohe Lagerstabilität auf. Eine Phasenseparation unterschiedlicher Komponenten oder eine Gelierung während des Lagerns wurde nicht beobachtet.

Die folgenden Beispiele dienen der detaillierten Erläuterung der Erfindung und sind in keiner Weise als Einschränkung zu verstehen.

### Herstellung der Hydrophobierungsmittel:

In einem Reaktor mit drei Liter Volumen wurden entsprechend den Angaben in Tabelle 1 deionisiertes Wasser, die wässrige Silikonharz-Emulsion Silres BS 60 (Handelsname der Firma Wacker Chemie; Feststoffanteil 60 Gew.-%), das wässrige Silica-Sol Bindzil 2040 (Handelsname der Firma AKZO-NOBEL; Feststoffanteil 40 Gew.-%) sowie gegebenenfalls 3-Glycidoxypropyltrimethoxysilan (Geniosil GF 80, Handelsname der Firma Wacker Chemie) vorgelegt, unter Rühren auf 50°C erwärmt und für fünf Stunden bei dieser Temperatur gerührt. Nach der Abkühlung auf Raumtemperatur wurden Dispersionen mit einem Feststoffgehalt von 40 Gew.-% erhalten.

**Tabelle 1: Rezepturen zur Herstellung der Hydrophobierungsmittel der (Vergleichs)Beispiele 1 bis 4:**

| | Wasser | Silres BS 60 | Silica-Sol Bindzil 2040 | Geniosil GF 80 | Viskosität |
|---|---|---|---|---|---|
| | [g] | [g] | [g] | [g] | [mPa.s] |
| Bsp.1 | 364,0 | 634,0 | 964,0 | 29,0 | 9,8 |
| Bsp.2 | 423,0 | 777,3 | 776,3 | 23,4 | 13, 5 |
| Besp.3 | 354,0 | 650,0 | 975,4 | 20,6 | 9,1 |
| V-Bsp.4 | 332,0 | 668,0 | 1000,0 | 0 | 8,9 |

### Polymer-Dispersionen:

### Polymer-Dispersion 1 (Dispersion 1):

### mit Vinyltriethoxysilan als Comonomer:

Wässerige, Emulgator stabilisierte Dispersion eines Copolymers basierend auf 59,5 Gew.-% Butylacrylat, 24 Gew.-% Methylmethacrylat, 11 Gew.-% Styrol, 5 Gew.-% Methacrylsäure und 0,5 Gew.-% Vinyltriethoxysilan mit einem Festgehalt von 42,4 Gew.-% und einer Mindestfilmbildungstemperatur (bestimmt nach DIN ISO 2115) von 5°C.

### Polymer-Dispersion 2 (Dispersion 2):

### kein Vinyltriethoxysilan-Comonomer:

Wässerige, Emulgator stabilisierte Dispersion eines Copolymers basierend auf 60,0 Gew.-% Butylacrylat, 24 Gew.-% Methylmethacrylat, 11 Gew.-% Styrol und 5 Gew.-% Methacrylsäure mit einem Festgehalt von 42,4 Gew.-% (DIN EN ISO 3251) und einer Mindestfilmbildungstemperatur (bestimmt nach DIN ISO 2115) von 5°C.

### Polymerzusammensetzungen:

Die Rezepturen zur Herstellung der Polymerzusammensetzungen der (Vergleichs)Beispiele 7 bis 12 sind in Tabelle 2 aufgeführt. Es wurden 90 g der in Tabelle 2 angegebenen Polymer-Dispersion und gegebenenfalls ein Additiv in den in Tabelle 2 angegebenen Mengen eingesetzt.
Zur Herstellung der Polymerzusammensetzungen beziehungsweise der Additive der (Vergleichs)Beispiele 9 bis 12 kamen je 11 Gew.-% (fest/fest) Silres BS 60 zum Einsatz, bezogen auf den Feststoffgehalt der jeweiligen Polymerzusammensetzung.
Zur Herstellung von Polymerzusammensetzungen wurden die in Tabelle 2 genannten Komponenten bei Raumtemperatur gemischt und 4 Stunden mit einem Labor-Rührer gerührt.

### Stabilität der wässrigen Hydrophobierungsmittel:

Die Stabilität der Hydrophobierungsmittel wurde ermittelt, indem die wässrigen Dispersionen der (Vergleichs)Beispiele 7 bis 12 je für 4 Wochen bei 50°C gelagert wurden.
Die Dispersionen der Beispiele 1 bis 3 waren über den gesamten Beobachtungszeitraum stabil, die Dispersion des Vergleichsbeispiels war hingegen geliert und damit nicht lagerstabil.

### Klebrigkeitstest:

Es wurde ein Polymerfilm der jeweiligen Polymerzusammensetzung auf eine Leneta Prüfkarte mit einer Nassschichtdicke von 150 Mikrometern aufgetragen und bei 50% Luftfeuchtigkeit und 23°C 24 Stunden getrocknet. Anschließend wurden Teststücke herausgeschnitten (3,8 x 3,8 cm).

Die Teststücke wurden auf der beschichteten Seite aufeinander gelegt und mit einem Gewicht von einem Kilogramm belastet. Nach 24 Stunden Lagerung bei 50% Luftfeuchtigkeit und 23°C wurden die Teststücke getrennt und visuell mit Schulnoten beurteilt:
Note 1: Beschichtung nicht klebrig;
Note 2: Beschichtung kaum merklich klebrig;
Note 3: Beschichtung schwach klebrig;
Note 4: Beschichtung erheblich klebrig;
Note 5: Beschichtung stark klebrig.
Die Ergebnisse der Austestung mit den Polymerzusammensetzungen der (Vergleichs)Beispiele 7 bis 12 sind in Tabelle 2 zusammengefasst.

Für Anwendungen der Polymerzusammensetzungen in Beschichtungsmitteln ist eine möglichst geringe Klebrigkeit gewünscht. Denn klebrige Beschichtungen, beispielsweise Farbanstriche für Fenster, werden von Anwendern nicht akzeptiert. Zudem neigen klebrige Beschichtungen zur Schmutzaufnahme aus der Umgebungsluft. Im Extremfall können klebrige Beschichtungen von beispielsweise Fenstern dazu führen, dass sich die Fenster gar nicht mehr öffnen lassen.

### Messung dynamischer Kontaktwinkel:

Es wurde ein Polymerfilm der jeweiligen Polymerzusammensetzung mit einer Nassschichtdicke von 150 Mikrometer auf eine Glasplatte (4x20 cm) aufgetragen und für 24 Stunden bei 50% Luftfeuchtigkeit und 23°C getrocknet. Anschließend wurde die beschichtete Glasplatte mit destilliertem Wasser gewaschen und nochmals für 24 Stunden bei 50% Luftfeuchtigkeit und 23°C getrocknet. Von der so erhaltenen Probe wurde der Kontaktwinkel mit dem Messgerät MobileDrop der Firma Krüss nach DIN 55660 bestimmt.
Der dynamische Kontaktwinkel ist ein Indikator für die Hydrophobierung der Beschichtung.
Die Ergebnisse der Austestung mit den Polymerzusammensetzungen der (Vergleichs)Beispiele 7 bis 12 sind in Tabelle 2 zusammengefasst.

Aus Tabelle 2 geht hervor, dass die Polymerzusammensetzungen der Vergleichsbeispiele 11 und 12, die die Silikonharz-Emulsion Silres BS 60 enthalten, zwar Beschichtungen mit großen Kontaktwinkeln und damit guten Hydrophbierungseigen-schaften ergeben. Nachteiligerweise sind die Beschichtungen der Vergleichsbeispiele 11 und 12 aber stark klebrig. Dahingegen sind die erfindungsgemäß hergestellten Beschichtungen mit den Polymerzusammensetzungen der Beispiele 9 und 10 in gewünschter Weise hydrophobiert und darüber hinaus kaum merklich klebrig.

**Tabelle 2: Rezepturen der Polymerzusammensetzungen sowie Austestungsergebnisse:**

| | Polymer-Dispersion | Additiv | Klebrigkeit | Kontaktwinkel |
|---|---|---|---|---|
| V-Bsp.7 | Dispersion 1 | - | 1 | 85 |
| V-BSp.8 | Dispersion 2 | - | 1 | 88 |
| Bsp.9 | Dispersion 1 | 23,9 g von Bsp.1 | 2 | 96 |
| Bsp.10 | Dispersion 2 | 23,9 g von Bsp.1 | 2 | 98 |
| V-Bsp.11 | Dispersion 1 | 8,0 g Silres BS60 | 5 | 98 |
| V-Bsp.12 | Dispersion 2 | 8,0 g Silres BS60 | 5 | 99 |

## Patentansprüche

1. Polymerzusammensetzungen enthaltend ein oder mehrere Silan-haltige Mischpolymerisate und ein oder mehrere hydrophobierende Additive,
wobei die hydrophobierenden Additive auf Silica, einem oder mehreren Silikonharzen und einem oder mehreren funktionalisierten Alkylalkoxysilanen, deren Alkylgruppen mindestens eine Amino-, Carbonsäure-, Epoxy- oder Hydroxy-Gruppe tragen, basieren, **dadurch gekennzeichnet, dass** Silan-haltige Mischpolymerisate auf ethylenisch ungesättigten Monomeren basieren und Monomereinheiten von ethylenisch ungesättigten Silanen enthalten.

2. Polymerzusammensetzungen gemäß Anspruch 1, **dadurch gekennzeichnet, dass** ein oder mehrere Silikonharze aufgebaut sind aus Einheiten der allgemeinen Formel
RₐSi (OR')_{b} (OH)_{c} O_{(4-a-b-c)/2}
mit a = 0 bis 3, b = 0 bis 3, c = 0 bis 3,
wobei die Summe a+b+c je Einheit ≤ 3,5 ist und
die einzelnen Reste R gleiche oder verschiedene, verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeuten und
die einzelnen Reste R' gleiche oder verschiedene Alkylreste oder Alkoxyalkylenreste mit jeweils 1 bis 4 C-Atomen, wobei die Reste R und R' auch mit Halogenen, wie Cl, Ether-, Thioether-, Ester-, Amid-, Nitril-, Hydroxyl-, Amin-, Carboxyl-, Sulfonsäure-, Carbonsäureanhydrid- oder Carbonyl-Gruppen substituiert sein können.

3. Polymerzusammensetzungen gemäß Anspruch 1 oder 2, **dadurch gekennzeichnet, dass** ein oder mehrere funktionalisierte Alkylalkoxysilane die allgemeinen Formel
(R¹O)ₚSi(R²X) ₄₋ₚ (I)
erfüllen, worin
R¹ ein Wasserstoffatom oder einen Kohlenwasserstoffrest mit 1 bis 18 Kohlenstoffatom, der durch ein oder mehrere voneinander separate Sauerstoffatome unterbrochen sein kann, oder einen Rest der Formel -COCH₃, -COC₂H₅ oder -CH₂CH₂OH bedeutet,
R² einen, gegebenenfalls substituierten, Alkylen-Rest mit 1 bis 20 Kohlenstoffatomen bedeutet, in dem einander nicht benachbarte Methyleneinheiten durch Sauerstoff ersetzt sein können, und
X über eine kovalente Bindung an R² gebunden ist und für einen Aminorest -NHR³, einen Epoxyrest -CR⁴(O)CR⁵R⁶, einen Carbonsäurerest -COOH oder einen Hydroxyrest -OH steht, wobei R³ ein Wasserstoffatom oder einen gegebenenfalls substituierten Alkyl-, Aryl- oder Aminoalkyrest mit 1 bis 10 Kohlenstoffatomen bedeutet,
R⁴, R⁵, R⁶ ein Wasserstoffatom oder einen gegebenenfalls substituierten Alkyl- oder Arylrest mit 1 bis 10 Kohlenstoffatomen bedeutet,
wobei die jeweiligen Reste R¹, R², R³, R⁴, R⁵ und R⁶ ihre Werte jeweils unabhängig voneinander annehmen, und wobei R²X über ein Kohlenstoffatom des Restes R² an das Siliciumatom der Formel I gebunden ist.

4. Polymerzusammensetzungen gemäß Anspruch 1 bis 3, **dadurch gekennzeichnet, dass** ein oder mehrere funktionalisierte Alkylalkoxysilane ausgewählt werden aus der Gruppe umfassend (3-Aminopropyl) triethoxysilan, (3-Aminopropyl) trimethoxysilan, N- (2-Aminoethyl) (3-Aminopropyl) triethoxysilan, N-(2-Aminoethyl) (3-Aminopropyl) trimethoxysilan, N-(2-Aminoethyl) (3-Aminopropyl)methyldimethoxysilan, N-Cyclohexylaminomethylmethyldiethoxysilan, (3-Glycidoxypropyl)triethoxysilan, 3-Glycidoxypropyl) trimethoxysilan.

5. Polymerzusammensetzungen gemäß Anspruch 1 bis 4, **dadurch gekennzeichnet, dass** die hydrophobierenden Additive auf 10 bis 90 Gew.-% Silikonharz basieren, bezogen auf das Trockengewicht der hydrophobierenden Additive.

6. Polymerzusammensetzungen gemäß Anspruch 1 bis 5, **dadurch gekennzeichnet, dass** die hydrophobierenden Additive auf 10 bis 90 Gew.-% Silica basieren, bezogen auf das Trockengewicht der hydrophobierenden Additive.

7. Polymerzusammensetzungen gemäß Anspruch 1 bis 6, **dadurch gekennzeichnet, dass** die hydrophobierenden Additive zu 0,1 bis 10 Gew.-% auf den funktionalisierten Alkylalkoxysilanen basieren, bezogen auf den Silica-Anteil der hydrophobierenden Additive (trocken/trocken).

8. Polymerzusammensetzungen gemäß Anspruch 1 bis 7, **dadurch gekennzeichnet, dass** die hydrophobierenden Additive zu 0,1 bis 10 Gew.-% auf den funktionalisierten Alkylalkoxysilanen basieren, bezogen auf Silica- und Silikonharz-Anteil der hydrophobierenden Additive (trocken/trocken).

9. Polymerzusammensetzungen gemäß Anspruch 1 bis 8, **dadurch gekennzeichnet, dass** 1 bis 40 Gew.-% hydrophobierende Additive gemäß Anspruch 1 bis 8 enthalten sind, bezogen auf das Trockengewicht der Polymerzusammensetzungen.

10. Polymerzusammensetzungen gemäß Anspruch 1 bis 9, **dadurch gekennzeichnet, dass** 60 bis 99 Gew.-% Polymere von ethylenisch ungesättigten Monomeren enthalten sind, bezogen auf das Trockengewicht der Polymerzusammensetzungen.

11. Verfahren zur Herstellung der Polymerzusammensetzungen nach Anspruch 1 bis 9, **dadurch gekennzeichnet, dass** ein oder mehrere hydrophobierende Additive mit einem oder mehreren Silan-haltigen Mischpolymerisaten gemischt werden.

12. Verfahren zur Herstellung der Polymerzusammensetzungen nach Anspruch 11, **dadurch gekennzeichnet, dass** hydrophobierende Additive hergestellt werden, indem Silica, ein oder mehrere Silikonharze und ein oder mehrere funktionalisierte Alkylalkoxysilane, deren Alkylgruppen mindestens eine Amino-, Carbonsäure-, Epoxy- oder Hydroxy-Gruppe tragen, gemischt werden.

13. Kompositpartikel enthaltende Zusammensetzungen basierend auf Silica, einem oder mehreren Silikonharzen, einem oder mehreren funktionalisierten Alkylalkoxysilanen, deren Alkylgruppen mindestens eine Amino-, Carbonsäure-, Epoxy- oder Hydroxy-Gruppe tragen, und einem oder mehreren Silan-haltigen Mischpolymerisaten, die auf ethylenisch ungesättigten Monomeren basieren und Monomereinheiten von ethylenisch ungesättigten Silanen enthalten,
wobei ein oder mehrere Kompositpartikel enthalten sind, die erhältlich sind durch Kondensation von Silica und/oder Silikonharzen mit einem oder mehreren Silan-haltigen Mischpolymerisaten in einem wässrigen Lösungsmittel,
wobei in Folge der Kondensation ein oder mehrere Silan-haltige Mischpolymerisate auf Silica und/oder Silikonharze fixiert werden.

14. Verwendung der Polymerzusammensetzungen aus Anspruch 1 bis 10 oder der Kompositpartikel enthaltenden Zusammensetzungen aus Anspruch 13 als Beschichtungsmittel oder als Additiv für Beschichtungsmittel, wie Lacke, Farben, Versiegelungsmittel oder für die Faser-, Textil- oder Papier-Beschichtung.

## Claims

1. Polymer compositions containing one or more silane-containing copolymers and one or more hydrophobicizing additives,
where the hydrophobicizing additives are based on silica, one or more silicone resins and one or more functionalized alkylalkoxysilanes whose alkyl groups bear at least one amino, carboxyl, epoxy or hydroxy group, **characterized in that** the silane-containing copolymers are based on ethylenically unsaturated monomers and contain monomer units of ethylenically unsaturated silanes.

2. Polymer compositions according to Claim 1, **characterized in that** one or more silicone resins are made up of units of the general formula
RₐSi (OR')_{b} (OH) _{c}O(_{4-a-b-c})_{/2}
where a = 0 to 3, b = 0 to 3, c = 0 to 3,
where the sum of a + b + c per unit is ≤ 3.5 and the individual radicals R are identical or different, branched or unbranched alkyl radicals having from 1 to 22 carbon atoms, cycloalkyl radicals having from 3 to 10 carbon atoms, alkylene radicals having from 2 to 4 carbon atoms or aryl, aralkyl, alkylaryl radicals having from 6 to 18 carbon atoms and
the individual radicals R' are identical or different alkyl radicals or alkoxyalkylene radicals each having from 1 to 4 carbon atoms,
where the radicals R and R' can also be substituted by halogens such as Cl, ether, thioether, ester, amide, nitrile, hydroxyl, amine, carboxyl, sulfonic acid, carboxylic anhydride or carbonyl groups.

3. Polymer compositions according to Claim 1 or 2, **characterized in that** one or more functionalized alkylalkoxysilanes have the general formula
(R¹O)ₚSi(R²X)₄₋ₚ (I),
where
R¹ is a hydrogen atom or a hydrocarbon radical which has from 1 to 18 carbon atoms and can be interrupted by one or more nonadjacent oxygen atoms or is a radical of the formula -COCH₃, -COC₂H₅ or -CH₂CH₂OH,
R² is an optionally substituted alkylene radical which has from 1 to 20 carbon atoms and in which nonadjacent methylene units can be replaced by oxygen and
X is bound via a covalent bond to R² and is an amino radical -NHR³, an epoxy radical -CR⁴(O) CR⁵R⁶, a carboxyl radical -COOH or a hydroxy radical -OH, where
R³ is a hydrogen atom or an optionally substituted alkyl, aryl or aminoalkyl radical having from 1 to 10 carbon atoms,
R⁴, R⁵, R⁶ are each a hydrogen atom or an optionally substituted alkyl or aryl radical having from 1 to 10 carbon atoms,
where the respective radicals R¹, R², R³, R⁴, R⁵ and R⁶ can each assume their meanings independently of one another and R²X is bound via a carbon atom of the radical R² to the silicon atom in the formula I.

4. Polymer compositions according to any of Claims 1 to 3, **characterized in that** one or more functionalized alkylalkoxysilanes are selected from the group consisting of (3-aminopropyl)triethoxysilane, (3-aminopropyl)trimethoxysilane, N-(2-aminoethyl)(3-aminopropyl)triethoxysilane, N-(2-aminoethyl)(3-aminopropyl)trimethoxysilane, N-(2-aminoethyl) (3-aminopropylmethyldimethoxysilane, N-cyclohexylaminomethylmethyldiethoxysilane, (3-glycidoxypropyl)triethoxysilane, 3-glycidoxypropyl)trimethoxysilane.

5. Polymer compositions according to any of Claims 1 to 4, **characterized in that** the hydrophobicizing additives are based on from 10 to 90% by weight of silicone resin, based on the dry weight of the hydrophobicizing additives.

6. Polymer compositions according to any of Claims 1 to 5, **characterized in that** the hydrophobicizing additives are based on from 10 to 90% by weight of silica, based on the dry weight of the hydrophobicizing additives.

7. Polymer compositions according to any of Claims 1 to 6, **characterized in that** the hydrophobicizing additives are based to an extent of from 0.1 to 10% by weight on the functionalized alkylalkoxysilanes, based on the proportion of silica in the hydrophobicizing additives (dry/dry).

8. Polymer compositions according to any of Claims 1 to 7, **characterized in that** the hydrophobicizing additives are based to an extent of from 0.1 to 10% by weight on the functionalized alkylalkoxysilanes, based on the proportion of silica and silicone resin in the hydrophobicizing additives (dry/dry).

9. Polymer compositions according to any of Claims 1 to 8, **characterized in that** from 1 to 40% by weight of hydrophobicizing additives according to any of Claims 1 to 8 are present, based on the dry weight of the polymer compositions.

10. Polymer compositions according to any of Claims 1 to 9, **characterized in that** from 60 to 99% by weight of polymers of ethylenically unsaturated monomers are present, based on the dry weight of the polymer compositions.

11. Process for producing the polymer compositions according to any of Claims 1 to 9, **characterized in that** one or more hydrophobicizing additives are mixed with one or more silane-containing copolymers.

12. Process for producing the polymer compositions according to Claim 11, **characterized in that** hydrophobicizing additives are produced by mixing silica, one or more silicone resins and one or more functionalized alkylalkoxysilanes whose alkyl groups bear at least amino, carboxyl, epoxy or hydroxy group.

13. Compositions which contain composite particles and are based on silica, one or more silicone resins, one or more functionalized alkylalkoxysilanes whose alkyl groups bear at least one amino, carboxyl, epoxy or hydroxy group and one or more silane-containing copolymers which are based on ethylenically unsaturated monomers and contain monomer units of ethylenically unsaturated silanes, wherein one or more composite particles obtainable by condensation of silica and/or silicone resins with one or more silane-containing copolymers in an aqueous solvent, with one or more silane-containing copolymers being fixed onto silica and/or silicone resins as a result of the condensation, are present.

14. Use of the polymer compositions according to any of Claims 1 to 10 or of the compositions according to Claim 13 containing composite particles as coating composition or as additive for coating compositions such as varnishes, paints, sealants or for the coating of fibres, textiles or paper.

## Revendications

1. Compositions de polymère contenant un ou plusieurs copolymérisats contenant un silane et un ou plusieurs additifs à effet hydrophobe,
les additifs à effet hydrophobe étant à base de silice, d'une ou plusieurs résines de silicone et d'un ou plusieurs alkylalcoxysilanes fonctionnalisés, dont les groupes alkyle portent au moins un groupe amino, acide carboxylique, époxy ou hydroxy, **caractérisées en ce que** les copolymérisats contenant un silane sont à base de monomères éthyléniquement insaturés et contiennent des motifs monomériques de silanes éthyléniquement insaturés.

2. Compositions de polymère selon la revendication 1, **caractérisées en ce qu'**une ou plusieurs résines de silicone sont construites à partir de motifs de formule générale
RₐSi(OR')_{b}(OH)_{c}O_{(-b-c)/2}
avec a = 0 à 3, b = 0 à 3, c = 0 à 3,
la somme a + b + c étant par motif ≤ 3,5 et
les radicaux individuels R signifiant des radicaux alkyle ramifiés ou non ramifiés comportant 1 à 22 atomes de C, des radicaux cycloalkyle comportant 3 à 10 atomes de C, des radicaux alkylène comportant 2 à 4 atomes de C, ainsi que des radicaux aryles aralkyle, alkylaryle comportant 6 à 18 atomes de C, identiques ou différents et
les radicaux individuels R' signifiant des radicaux alkyle ou des radicaux alcoxyalkylène comportant à chaque fois 1 à 4 atomes de C, identiques ou différents,
les radicaux R et R' pouvant également être substitués par des halogènes, comme Cl, des groupes éther, thioéther, ester, amide, nitrile, hydroxyle, amine, carboxyle, acide sulfonique, anhydride d'acide carboxylique ou carbonyle.

3. Compositions de polymère selon la revendication 1 ou 2, **caractérisées en ce qu'**un ou plusieurs alkylalcoxysilanes fonctionnalisés satisfont à la formule générale
(R¹O)ₚSi(R²X)₄₋ₚ (I) ,
dans laquelle
R¹ signifie un atome d'hydrogène ou un radical hydrocarboné comportant 1 à 18 atomes de carbone, qui peut être interrompu par un ou plusieurs atomes d'oxygène séparés les uns des autres, ou un radical de formule -COCH₃, -COC₂H₅ ou -CH₂CH₂OH,
R² signifie un radical alkylène, éventuellement substitué, comportant 1 à 20 atomes de carbone, dans lequel des motifs méthylène non voisins peuvent être remplacés par oxygène, et
X est lié à R² par l'intermédiaire d'une liaison covalente et représente un radical amino -NHR³, un radical époxy, -CR⁴(O)CR⁵R⁶, un radical acide carboxylique -COOH ou un radical hydroxy -OH, R³ signifiant un atome d'hydrogène ou un radical alkyle, aryle ou amino éventuellement substitué comportant 1 à 10 atomes de carbone,
R⁴, R⁵, R⁶ signifiant un atome d'hydrogène ou un radical alkyle ou aryle éventuellement substitué comportant 1 à 10 atomes de carbone,
les radicaux respectifs R¹, R², R³, R⁴, R⁵ et R⁶ prenant leurs valeurs indépendamment les uns des autres, et
R²X étant lié à l'atome de silicium de la formule I par l'intermédiaire d'un atome de carbone du radical R2_{.}

4. Compositions de polymère selon les revendications 1 à 3, **caractérisées en ce qu'**un ou plusieurs alkylalcoxysilanes fonctionnalisés sont choisis dans le groupe comprenant le (3-aminopropyl)triéthoxysilane, le (3-aminopropyl)triméthoxysilane, le N-(2-aminoéthyl) (3-aminopropyl)triéthoxysilane, le N-(2-aminoéthyl)(3-aminopropyl)triméthoxysilane, le N-(2-aminoéthyl) (3-aminopropyl)méthyldiméthoxysilane, le N-cyclohexyl-aminométhylméthyldiéthoxysilane, le (3-glycidoxypropyl)triéthoxysilane, le 3-glycidoxypropyl)triméthoxysilane.

5. Compositions de polymère selon les revendications 1 à 4, **caractérisées en ce que** les additifs à effet hydrophobe sont à base de 10 à 90 % en poids de résine de silicone, par rapport au poids sec des additifs à effet hydrophobe.

6. Compositions de polymère selon les revendications 1 à 5, **caractérisées en ce que** les additifs à effet hydrophobe sont à base de 10 à 90 % en poids de silice, par rapport au poids sec des additifs à effet hydrophobe.

7. Compositions de polymère selon les revendications 1 à 6, **caractérisées en ce que** les additifs à effet hydrophobe sont à base de 0,1 à 10 % en poids d'alkylalcoxysilanes fonctionnalisés, par rapport à la proportion de silice des additifs à effet hydrophobe (sec/sec).

8. Compositions de polymère selon les revendications 1 à 7, **caractérisées en ce que** les additifs à effet hydrophobe sont à base de 0,1 à 10 % en poids d'alkylalcoxysilanes fonctionnalisés, par rapport à la proportion de silice et de résine de silicone des additifs à effet hydrophobe (sec/sec).

9. Compositions de polymère selon les revendications 1 à 8, **caractérisées en ce que** 1 à 40 % en poids d'additifs à effet hydrophobe selon les revendications 1 à 8 sont contenus, par rapport au poids sec des compositions de polymère.

10. Compositions de polymère selon les revendications 1 à 9, **caractérisées en ce que** 60 à 99 % en poids de polymères de monomères éthyléniquement insaturés sont contenus, par rapport au poids sec des compositions de polymère.

11. Procédé pour la préparation des compositions de polymère selon les revendications 1 à 9, **caractérisé en ce qu'**un ou plusieurs additifs à effet hydrophobe sont mélangés avec un ou plusieurs copolymérisats contenant un silane.

12. Procédé pour la préparation des compositions de polymère selon la revendication 11, **caractérisé en ce que** des additifs à effet hydrophobe sont préparés par le fait que de la silice, une ou plusieurs résines de silicone et un ou plusieurs alkylalcoxysilanes fonctionnalisés, dont les groupes alkyle portent au moins un groupe amino, acide carboxylique, époxy ou hydroxy, sont mélangés.

13. Compositions contenant des particules composites à base de silice, d'une ou plusieurs résines de silicone, d'un ou plusieurs alkylalcoxysilanes fonctionnalisés, dont les groupes alkyle portent au moins un groupe amino, acide carboxylique, époxy ou hydroxy, et d'un ou plusieurs copolymérisats contenant un silane, qui sont à base de monomères éthyléniquement insaturés et contiennent des motifs monomériques de silanes éthyléniquement insaturés, une ou plusieurs particules composites étant contenues, qui peuvent être obtenues par condensation de silice et/ou de résines de silicone avec un ou plusieurs copolymérisats contenant un silane dans un solvant aqueux,
où, à la suite de la condensation, un ou plusieurs copolymérisats contenant un silane sont fixés sur de la silice et/ou des résines de silicone.

14. Utilisation des compositions de polymère selon les revendications 1 à 10 ou des compositions contenant des particules composites selon la revendication 13 en tant qu'agent de revêtement ou en tant qu'additif pour des agents de revêtement, comme des laques, des couleurs, des agents d'étanchéité ou pour le revêtement de fibres, de textile ou de papier.
